## Europäisches Patentamt

## European Patent Office

## Office européen des brevets

(11) Veröffentlichungsnummer: **0 270 892 B1**

(12) **EUROPÄISCHE PATENTSCHRIFT**

(45) Veröffentlichungstag der Patentschrift: **25.09.91**

(21) Anmeldenummer: **87117125.2**

(22) Anmeldetag: **20.11.87**

Verbunden mit 87907952.3/0331682
(europäische
Anmeldenummer/Veröffentlichungsnummer)
durch Entscheidung vom 12.06.90.

Die Akte enthält technische Angaben, die nach
dem Eingang der Anmeldung eingereicht wurden
und die nicht in dieser Patentschrift enthalten sind.

(51) Int. Cl.<sup>5</sup>: **C08G 18/08**, C08G 18/28,
C09D 175/04

(54) **Überzugsmittel mit verlängerter Topfzeit.**

(30) Priorität: **20.11.86 DE 3639637**

(43) Veröffentlichungstag der Anmeldung:
**15.06.88 Patentblatt 88/24**

(45) Bekanntmachung des Hinweises auf die
Patenterteilung:
**25.09.91 Patentblatt 91/39**

(84) Benannte Vertragsstaaten:
**AT BE CH DE ES FR GB IT LI NL SE**

(56) Entgegenhaltungen:
**EP-A- 0 001 304**
**DE-A- 3 523 971**

(73) Patentinhaber: **BASF Lacke + Farben Aktiengesellschaft
Max-Winkelmann-Strasse 80
W-4400 Münster(DE)**

(72) Erfinder: **Möller, Dieter
Berentrup 5
W-4715 Ascheberg(DE)**
Erfinder: **Vorbeck, Udo
Rüllerstrasse 90
W-4715 Ascheberg(DE)**

(74) Vertreter: **Leifert, Elmar, Dr.
BASF Lacke + Farben AG Patentabteilung
Max-Winkelmann-Strasse 80 Postfach 61 23
W-4400 Münster(DE)**

**Beschreibung**

Die Erfindung betrifft eine Überzugszusammensetzung, enthaltend organische Lösungsmittel, ein Gemisch einer Polyhydroxykomponente (A) und einer Polyisocyanatkomponente (B) sowie ein topfzeitverlängerndes Mittel, und die Verwendung dieser Überzugszusammensetzung insbesondere für die Autoreparaturlackierung.

2-Komponenten-Polyurethansysteme werden in der Automobilindustrie eingesetzt, wo sie beispielsweise Verwendung in der Autoreparaturlackierung finden. Ein Nachteil dieser bekannten Zusammensetzungen besteht darin, daß die Topfzeit der Zusammensetzungen zu kurz ist, so daß schon während des Auftragens auf ein Substrat eine Reaktion zwischen den beiden Komponenten stattfinden kann. Dieses Problem wird noch verstärkt, wenn ein Katalysator für die Polyurethanbildung verwendet wird. Es ist daher wünschenswert, daß eine 2-Komponenten-Polyurethanzusammensetzung eine verlängerte Topfzeit hat und daß sie trotz verlängerter Topfzeit nach dem Auftragen auf ein Substrat schnell gehärtet werden kann.

Der Einsatz von tertiären Alkoholen als topfzeitverlängernde Mittel in einem System, welches Isocyanatgruppen und mit diesen reaktionsfähige Gruppen enthält, ist bekannt. Aus der EP-B-1 304 ist bekannt, daß die Topfzeit einer Überzugszusammensetzung, die ein Gemisch einer Polyhydroxyverbindung und eines Polyisocyanats in einem organischen Lösungsmittel enthält, verlängert werden kann durch den Zusatz von 2-Methyl-2-propanol und/oder 2-Methyl-2-butanol, wenn mindestens 0,8 Äquivalente des Alkohols je Äquivalent des Polyisocyanats eingesetzt werden.

Insbesondere bei reaktionsträgen Isocyanaten muß im Interesse einer schnellen Vernetzung und Benzinfestigkeit der applizierten Lacke für eine Reaktionsbeschleunigung gesorgt werden. Eine Katalyse der Vernetzungsreaktion beispielsweise mit Dimethylethanolamin und Dibutylzinndilaurat erbrachte selbst bei einer Reduzierung der Topfzeit auf 2 Stunden nicht die gewünschte Vernetzungsbeschleunigung im applizierten Lackfilm.

Eine Möglichkeit der Reaktionsbeschleunigung besteht in der Einführung von Carboxylgruppen in die Polyolkomponente, was allerdings mit dem Nachteil einer starken Topfzeitverkürzung verbunden ist. Die Topfzeitverlängerung derartiger Säuregruppen enthaltender 2-Komponenten-Polyurethansysteme mittels tertiärer Alkohole, wie beispielsweise in der EP-B 1 304 beschrieben, reicht in den meisten Fällen nicht aus.

Die Aufgabe der vorliegenden Erfindung bestand darin, die Topfzeit der Systeme aus Kombinationen von Polyolen mit Carboxylgruppen und Polyisocyanaten wirksam zu verlängern.

Die Aufgabe wird überraschenderweise durch die Überzugszusammensetzung der eingangs genannten Art gelöst, die dadurch gekennzeichnet ist, daß die Polyhydroxykomponente eine Säurezahl von 5 bis 25 mg KOH/g und eine Hydroxylzahl von mindestens 80 mg KOH/g hat und als topfzeitverlängernde Mittel ein Gemisch aus 0,1 bis 4,0 Gew.-%, bezogen auf das Gesamtgewicht der Überzugszusammensetzung, einer Verbindung mit einer tertiären Aminogruppe oder eine Amidgruppe (C) und 1 bis 15 Gew.-%, bezogen auf das Gesamtgewicht der Überzugszusammensetzung, eines tertiären Monoalkohols (D) mit einer Verdunstungszahl unterhalb von 60, wobei als tertiäre Alkohole 2-Methyl-2-propanol und 2-Methyl-2-butanol ausgeschlossen werden, verwendet wird und die Polyisocyanatkomponente (B) ausschließlich sekundäre Isocyanatgruppen hat.

Als Polyhydroxykomponente mit einer Säurezahl von 5 bis 25 mg KOH/g kommen Hydroxyacrylate, Polyesterpolyole und Polyetherpolyole in Frage. Die Polyhydroxyverbindungen haben eine Hydroxylzahl von mindestens 80 mg KOH/g.

Beispiele geeigneter Hydroxyacrylate sind Copolymere von Styrol, Vinyltoluol, Acrylsäure, Methacrylsäure, Estern der Malein- oder Fumarsäure, Alkylacrylaten und Alkylmethacrylaten mit 1 bis 14 Kohlenstoffatomen im Alkylrest wie beispielsweise Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, Decylacrylat, Dodecylacrylat, Pentylmethacrylat, Isoamylmethacrylat, Hexylmethacrylat, 2-Ethylbutylmethacrylat, Octylmethacrylat, Decylmethacrylat, Dodecylmethacrylat, Methylmethacrylat sowie von hydroxylgruppenhaltigen Estern der Acrylsäure bzw. der Methacrylsäure, wie beispielsweise Hydroxyethylacrylat, Hydroxypropylacrylat, Hydroxybutylacrylat, Hydroxyamylacrylat, Hydroxyhexylacrylat, Hydroxyoctylacrylat, 2-Hydroxypropylacrylat, 2-Hydroxybutylacrylat, 3-Hydroxybutylacrylat und die entsprechenden Methacrylate. Vorzugsweise haben die geeigneten Hydroxyacrylate eine Hydroxylzahl im Bereich von 80 bis 750.

Geeignete Polyetherpolyole sind beispielsweise Polytetrahydrofurandiol und Polypentanetherdiol sowie verzweigte Polyetherpolyole, die hergestellt werden aus einem mehrwertigen Alkohol und einem Alkylenoxyd, wie beispielsweise Ethylenoxyd oder Propylenoxyd.

Die einsetzbaren Polyesterpolyole werden hergestellt durch Polykondensation von 2- und/oder mehrwertigen Carbonsäuren, wie beispielsweise Adipinsäure, Maleinsäure, Phthalsäure, Isophthalsäure, Terephthalsäure, Tetrahydrophthalsäure, Trimellitsäure, mit 2- und/oder mehrwertigen Alkoholen, wie beispielsweise

2

Neopentylglykol, Glycerin, Trimethylolpropan und Pentaerythrit. Die Polyesterpolyole können auch einwertige Alkohole, wie beispielsweise Benzylalkohol, und/oder, einwertige Carbonsäuren, wie beispielsweise Benzoesäure, einkondensiert enthalten.

Als Lösungsmittel kommen beispielsweise Ketone, Ether, Ester sowie Kohlenwasserstoffe in Frage.

Bei reaktionsträgen Polyisocyanaten ist der Einbau von reaktionsbeschleunigenden Carboxylgruppen besonders wichtig. Gerade bei diesen Systemen ist das Bedürfnis nach einer effektiven Topfzeitverlängerung besonders groß. Die Polyisocyanatkomponente (B) hat infolgedessen ausschließlich sekundäre Isocyanatgruppen, die wesentlich reaktionsträger sind als primäre Isocyanatgruppen. Als Beispiel hierfür seien die Polyisocyanurat-Polyisocyanate von Isophorondiisocyanat, die Reaktionsprodukte aus 3 Mol Isophorondiisocyanat mit 1 Mol Wasser und die Addukte von 3 Mol Isophorondiisocyanat mit 1 Mol eines Triols zu nennen.

Tertiäre, stickstoffbasische Gruppen enthaltende Substanzen wirken im allgemeinen in Polyisocyanat-härtenden Systemen beschleunigend. Es war daher besonders überraschend und nicht vorhersehbar, daß die Kombination einer Verbindung mit einer tertiären Aminogruppe oder einer Amidgruppe mit einem tertiären Monoalkohol zu einer wirksamen Topfzeitverlängerung führt.

Vorteilhafterweise wird die Verbindung (C) ausgewählt aus der Gruppe Dimethylacetamid, Dimethylcyclohexylamin, N-Methylmorpholin, 1-Methylpyrrol, Methylimidazol, 1-Methylpyrrolidin.

Die tertiären Monoalkohole (D) weisen eine Verdungstungszahl unterhalb von 60 auf. Besonders vorteilhaft ist es, wenn die tertiären Monoalkohole (D) einen Flammpunkt oberhalb von 21 °C aufweisen.

Als tertiärer Monoalkohol wird besonders bevorzugt 1-Methoxytert.-butanol-2 (CAS-Reg.-Nr. 3587-64-2) verwendet, da dieser Alkohol einen Flammpunkt von 26 °C aufweist.

Es ist besonders bevorzugt, wenn die Polyhydroxykomponente (A) eine Säurezahl im Bereich von 10 bis 20 mg KOH/g aufweist.

Die besten Ergebnisse in bezug auf die Topfzeitverlängerung werden erzielt, wenn 0,8 bis 0,9 Gew.-%, bezogen auf das Gesamtgewicht der Überzugszusammensetzung, der Komponente (C) eingesetzt werden. Vorzugsweise werden dabei 10 bis 15 Gew.-% der Komponente (D) mitverwendet.

Das Verhältnis der Hydroxylgruppen der Polyhydroxykomponente (A) zu den Isocyanatgruppen der Polyisocyanatkomponente (B) liegt vorzugsweise im Bereich von 0,5 bis 2.

Die erfindungsgemäßen Überzugszusammensetzungen können Additive, wie z.B. Füllmittel, Antiabsetzmittel und Verlaufsmittel sowie Pigmente und Katalysatoren für die Polyurethanbildung enthalten.

Die erfindungsgemäßen Überzugszusammensetzungen können auf verschiedene Arten auf ein Substrat aufgebracht werden, also beispielsweise durch Streichen, Spritzen, Fluten, Tauchen, Walzen oder Rakeln.

Die organischen Lösungsmittel sowie die topfzeitverlängernden Mittel verdunsten während oder nach dem Auftragen auf das Substrat.

Die Überzugsmittel werden bei Temperaturen bis etwa 120 °C gehärtet. Die Härtungszeit, die abhängig ist von der Temperatur, dem eingesetzten Katalysator und natürlich vom Bindemittel selbst, liegt im Bereich von wenigen Minuten bis zu mehreren Tagen. Aufgrund der möglichen niedrigen Härtungstemperaturen werden die erfindungsgemäßen Überzugszusammensetzungen vorteilhafterweise als Autoreparaturlacke eingesetzt.

Es war besonders überraschend und nicht vorhersehbar, daß gerade die Kombination aus tertiärem Alkohol mit stickstoffbasischen Verbindungen zu einer erheblichen Topfzeitverlängerung führt, da tertiäre Aminoverbindungen normalerweise reaktionsbeschleunigend wirken.

Im folgenden wird anhand von Ausführungsbeispielen gezeigt, daß erfindungsgemäß die Topfzeit von 2 Komponenten-Polyurethan-Lacken wesentlich verlängert werden kann, wobei sich die Topfzeitverlängerungen in Größenordnungen von 4 Stunden und größer beweben. Als Topfzeit wird die Zeit definiert, die zu einer Verdopplung der Viskosität führt.

In den folgenden Beispielen werden 2 Hydroxyacrylate eingesetzt.

Hydroxyacrylat I: Caprolactonmodifiziertes Acrylat
Lösungsmittel: Butylacetat/Xylol (1:1)
Festkörper: 60,3 %
Viskosität: 3,75 dPa s (50%ig in Butylacetat)
Säurezahl (fest): 19
Hydroxylzahl: 98

Harz II:
Lösungsmittel: Butylacetat
Festkörper: 66,3 %

Viskosität: 7,05 dPa s
Säurezahl (fest): 19
Hydroxylzahl: 97

In den folgenden Beispielen werden die Polyolkomponenten I und II mit Polyisocyanurat-Isophorondiisocyanat (Warenzeichen Desmodur Z 4370) derart gemischt, daß das Äquivalentverhältnis OH:NCO = 1:1 ist.

Nach Zugabe des Gemisches aus (C) und (D) wird mit Butylacetat auf 40 s im DIN-4-Becher eingestellt und die Viskositätsentwicklung über 5 Stunden verfolgt.

Als tertiärer Alkohol wird in allen Beispielen 1-Methoxytert.-butanol-2 eingesetzt.

Nach Viskositätseinstellung von 40 s (DIN-4-Becher) wurde nach 1, 2, 3, 4 und 5 Stunden die Viskosität der Lösungen gemessen. Die Ergebnisse sind in den Diagrammen der Beispiele 1 bis 20 dargestellt. In den Fällen, in denen die Viskositätsmessungen vor Ablauf von 5 Stunden beendet wurden, waren die Proben vorher geliert.

Die durchgezogene Linie in den Diagrammen der Beispiele 1 bis 20 veranschaulicht zum Vergleich den zeitlichen Viskositätsverlauf des entsprechenden 2K-Polyurethansystems ohne den Zusatz des Gemisches aus (C) und (D).

Die in den Beispielen angegebenen Prozentangaben sind auf das Gesamtgewicht der Überzugszusammensetzung bezogen.

Beispiel 1:

Polyolkomponente I

Isocyanatkomponente (a)

(Desmodur Z 4370)

0,3 % Dimethylacetamid

Beispiel 2:

Polyolkomponente I

Isocyanatkomponente (a)

(Desmodur Z 4370)

0,6 Dimethylacetamid

Beispiel 3:
Polyolkomponente I
Isocyanatkomponente (a)
(Desmodur Z 4370)
0,9 % Dimethylacetamid

7

Beispiel 4:

Polyolkomponente I

Isocyanatkomponente (a)

(Desmodur Z 4370)

0,3 % Dimethylcyclohexylamin

Beispiel 5:

Polyolkomponente I

Isocyanatkomponente (a)

(Desmodur Z 4370)

0,6 % Dimethylcyclohexylamin

Beispiel 6:

Polyolkomponente I

Isocyanatkomponente (a)

(Desmodur Z 4370)

0,9 % Dimethylcyclohexylamin

Beispiel 7:

Polyolkomponente I

Isocyanatkomponente (a)

(Desmodur ⊐ 4370)

0,3 % N-Methylmorpholin

Beispiel 8:

Polyolkomponente I

Isocyanatkomponente (a)

(Desmodur Z 4370)

0,6 % N-Methylmorpholin

Beispiel 9:

Polyolkomponente I

Isocyanatkomponente (a)

(Desmodur ⊏ 4370)

0,9 % N-Methylmorpholin

Legend in chart:
+ 5% 1-Methoxy-tert.-butanol-2
10% 1-Methoxy-tert.-butanol-2
15% 1-Methoxy-tert.-butanol-2

Y-axis: Viskosität (sec Din 4-Becher)
X-axis: Zeit (h)

Beispiel 10:

Polyolkomponente II

Isocyanatkomponente (a)

(Desmodur Z 4370)

0,3 % Dimehtylacetamid

Viskosität (sec Din 4-Becher) vs Zeit (h)

+ 5% 1-Methoxy-tert.-butanol-2
10% 1-Methoxy-tert.-butanol-2
15% 1-Methoxy-tert.-butanol-2

Beispiel 11:

Polyolkomponente II

Isocyanatkomponente (a)

(Desmodur Z 4370)

0,9 % Dimethylacetamid

Beispiel 12:

Polyolkomponente II

Isocyanatkomponente (a)

(Desmodur Z 4370)

0,3 % Dimethylcyclohexylamin

Beispiel 13:

Polyolkomponente II

Isocyanatkomponente (a)

(Desmodur Z 4370)

0,6 % Dimethylcyclohexylamin

Beispiel 14:

Polyolkomponente II

Isocyanatkomponente (a)

(Desmodur Z 4370)

0,9 % Dimethylcyclohexylamin

Beispiel 15:

Polyolkomponente II

Isocyanatkomponente (a)

(Desmodur Z 4370)

0,3 % N-Methylmorpholin

Legend:
+ 5% 1-Methoxy-tert.-butanol-2
10% 1-Methoxy-tert.-butanol-2
• 15% 1-Methoxy-tert.-butanol-2

Zeit (h)

Beispiel 16:

Polyolkomponente II

Isocyanatkomponente (a)

(Desmodur Z 4370)

0,6 % N-Methylmorpholin

Beispiel 17:

Polyolkomponente II

Isocyanatkomponente (a)

(Desmodur Z 4370)

0,9 % N-Methylmorpholin

**Patentansprüche**

1. Überzugszusammensetzung, enthaltend organisches Lösungsmittel, ein Gemisch einer Polyhydroxykomponente (A) und einer Polyisocyanatkomponente (B) sowie ein t opfzeitverlängerndes Mittel, dadurch gekennzeichnet, daß die Polyhydroxykomponente eine Säurezahl von 5 bis 25 mg KOH/g und eine Hydroxylzahl von mindestens 80 mg KOH/g hat und als t opfzeitverlängerndes Mittel ein Gemisch aus 0,1 bis 4,0 Gew.-%, bezogen auf das Gesamtgewicht der Überzugszusammensetzung, einer Verbindung mit einer tertiären Aminogruppe oder einer Amidgruppe (C) und 1 bis 15 Gew.-%, bezogen auf das Gesamtgewicht der Überzugszusammensetzung, eines tertiären Monoalkohols (D) mit einer Verdunstungszahl unterhalb von 60, wobei als tertiäre Alkohole 2-Methyl-2-propanol und 2-Methyl-2-butanol ausgeschlossen werden, verwendet wird und die Polyisocyanatkomponente (B) ausschließlich sekundäre Isocyanatgruppen hat.

2.  Überzugszusammensetzung nach Anspruch 1, dadurch gekennzeichnet, daß als Polyisocyanatkomponente (B) Polyisocyanurat-Polyisocyanate von Isophorondiisocyanat, Reaktionsprodukte aus 3 Mol Isophorondiisocyanat mit 1 Mol Wasser oder die Addukte von 3 Mol Isophorondiisocyanat mit 1 Mol eines Triols verwendet werden.

3.  Überzugszusammensetzung nach Anspruch 1 bis 2, dadurch gekennzeichnet, daß die Verbindung (C) ausgewählt ist aus der Gruppe Dimethylacetamid, Dimethylcyclohexylamin, N-Methylmorpholin, 1-Methylpyrrol, Methylimidazol, 1-Methylpyrrolidin.

4.  Überzugszusammensetzung nach Anspruch 1 bis 3, dadurch gekennzeichnet, daß der tertiäre Monoalkohol (D) einen Flammpunkt oberhalb von 21 °C aufweist.

5.  Überzugszusammensetzung nach Anspruch 1 bis 4, dadurch gekennzeichnet, daß als tertiärer Monoalkohol (D) 1-Methoxy-tert.-butanol-2verwendet wird.

6.  Überzugszusammensetzung nach Anspruch 1 bis 5, dadurch gekennzeichnet, daß die Polyhydroxykomponente (A) eine Säurezahl im Bereich von 10 bis 20 mg KOH/g aufweist.

7.  Überzugszusammensetzung nach Anspruch 1 bis 6, dadurch gekennzeichnet, daß 0,8 bis 0,9 Gew.-% der Komponente (C) eingesetzt werden.

8.  Verwendung der Überzugszusammensetzung nach Anspruch 1 bis 7 für die Autoreparaturlackierung.

## Claims

1.  A coating composition containing an organic solvent, a mixture of a polyhydroxy component (A) and a polyisocyanate component (B), and a pot life extender, characterised in that the polyhydroxy component has an acid value of 5 to 25 mg of KOH/g, and a hydroxyl value of at least 80 mg KOH/g, and a mixture consisting of 0.1 to 4.0% by weight, based on the total weight of the coating composition, of a compound having a tertiary amino group or an amide group (C), and of 1 to 15% by weight, based on the total weight of the coating composition, of a tertiary monoalcohol (D), with an evaporation value of below 60, is used as pot life extender, 2-methyl-2-propanol and 2-methyl-2-butanol being excluded as the tertiary alcohol and polyisocyanate component (B) has exclusively secondary isocyanate groups.

2.  A coating composition according to Claim 1, characterised in that polyisocyanurate-polyisocyanates of isophorone diisocyanate, reaction products of 3 mol of isophorone diisocyanate with 1 mol of water or the adducts of 3 mol of isophorone diisocyanate with 1 mol of a triol are used as the polyisocyanate component (B).

3.  A coating composition according to Claims 1 and 2, characterised in that the compound (C) is selected from the group comprising dimethylacetamide, dimethylcyclohexylamine, N-methylmorpholine, 1-methylpyrrole, methylimidazole and 1-methylpyrrolidine.

4.  A coating composition according to Claims 1 to 3, characterised in that the tertiary monoalcohol (D) has a flash point above 21 °C.

5.  A coating composition according to Claims 1 to 4, characterised in that 1-methoxy-tert.-butanol-2 is used as the tertiary monoalcohol (D).

22

6. A coating composition according to Claims 1 to 5, characterised in that the polyhydroxy component (A) has an acid value in the range from 10 to 20 mg of KOH/g.

7. A coating composition according to Claims 1 to 6, characterised in that 0.8 to 0.9% by weight of the component (C) is used.

8. Use of the coating composition according to Claims 1 to 7 for motor car refinishing.

**Revendications**

1. Composition de revêtement, contenant un solvant organique, un mélange d'un composant polyhydroxylé (A) et d'un composant de type polyisocyanate (B), ainsi qu'un agent prolongeant la vie en pot, caractérisée par le fait que le composant polyhydroxylé a un indice d'acide de 5 à 25 mg KOH/g et un indice d'hydroxyle d'au moins 80 mg KOH/g et qu'on utilise, comme agent prolongeant la vie en pot, un mélange de 0,1 à 4,0% en poids, par rapport au poids total de la composition de revêtement, d'un composé ayant un groupe amino tertiaire ou un groupe amide (C) et de 1 à 15% en poids, par rapport au poids total de la composition de revêtement, d'un monoalcool tertiaire (D) ayant un indice d'évaporation se situant au-dessous de 60, le méthyl-2 propanol-2 et le méthyl-2 butanol-2 étant exclus en tant qu'alcools tertiaires, et que le composant de type polyisocyanate (B) a des groupes isocyanate exclusivement secondaires.

2. Composition de revêtement selon la revendication 1, caractérisée par le fait que, comme composant de type polyisocyanate (B), on utilise des polyisocyanurates-polyisocyanates d'isophorone diisocyanate, produits de réaction de 3 moles d'isophorone diisocyanate avec 1 mole d'eau ou les produits d'addition de 3 moles d'isophorone diisocyanate avec 1 mole d'un triol.

3. Composition de revêtement selon la revendication 1 ou 2, caractérisée par le fait que le composé (C) est choisi dans le groupe constitué par le diméthylacétamide, la diméthylcyclohexylamine, 1a N-méthylmorpholine, le méthyl-1 pyrrole, le méthylimidazole, la méthyl-1 pyrrolidine.

4. Composition de revêtement selon l'une des revendications 1 à 3, caractérisée par le fait que le monoalcool tertiaire (D) présente un point d'inflammation se situant au-dessus de 21°C.

5. Composition de revêtement selon l'une des revendications 1 à 4, caractérisée par le fait qu'on utilise comme monoalcool tertiaire (D), le méthoxy-1 tert.-butanol-2.

6. Composition de revêtement selon l'une des revendications 1 à 5, caractérisée par le fait que le composant polyhydroxylé (A) présente un indice d'acide se situant dans la plage de 10 à 20 mg KOH/g.

7. Composition de revêtement selon l'une des revendications 1 à 6, caractérisée par le fait que l'on utilise 0,8 à 0,9% en poids du composant (C).

8. Utilisation de la composition de revêtement selon les revendications 1 à 7 pour le laquage de réparation des automobiles.